# EUROPEAN PATENT SPECIFICATION

(11) **EP 4 255 715 B1**
(45) Date of publication and mention of the grant of the patent: **06.08.2025**
(21) Application number: 20819736.8
(22) Date of filing: 03.12.2020
(51) Int. Cl.: B29C 55/00, B29C 55/12, B29C 59/00, B29C 59/04, B29C 55/28

(54) **POLYMER FILMS AND THEIR PRODUCTION AND USE**
POLYMERFOLIEN, IHRE HERSTELLUNG UND VERWENDUNG
FILMS POLYMÈRES, LEUR FABRICATION ET LEUR UTILISATION

(43) Date of publication of application: 11.10.2023
(73) Proprietor: The Supreme Industries Limited, Mumbai 400 093 (IN)
(72) Inventor: RASMUSSEN, Ole-Bendt, 6318 Walchwil (CH)
(74) Representative: Gill Jennings & Every LLP
(86) International application number: PCT/EP2020/084531
(87) International publication number: WO 2022/117198

(56) References cited:
- EP-A2- 0 361 865
- EP-B1- 0 361 865
- WO-A1-93/14928
- FR-A- 1 459 458
- GB-A- 1 206 765
- US-A- 3 871 947
- US-A- 5 203 941
- US-A1- 2006 182 950
- US-A1- 2010 040 837
- US-A1- 2012 064 298

## Description

The invention relates to a process of embossment to improve the stretchability of a polymer film.

Polymer film is very often used in a form, in which it has been subjected to uniaxial or biaxial stretching carried out in solid state. The uniaxial stretching may be in the machine direction (m.d.) or in the transverse direction (t.d.), and the biaxial stretching may be by one or more steps of m.d. stretching and one or more steps of t.d. stretching, or by combined m.d. and t.d. stretching. Such oriented film is e.g. used for manufacture of garbage bags and shopping bags, as a tarpaulin substitute and as roof cover. The film to become stretched may be a blown extruded film, or may be formed from a flat extrusion die, in both cases either while it is in molten or in dissolved state. If blown film is used, it is flattened before the stretching. These processes are very well known. A particular use of m.d. and/or t.d. oriented film is in the manufacture of "cross-laminates", i.e. polymer laminates which in analogy with plywood exhibit criss-crossing molecular orientation. This important use shall be further explained in connection with the description of a sub-claim. In existing technology, it has always been necessary to carry out the said stretching at a temperature rather close to the melting range of the polymer and in a stretch ratio quite close to the point of rupture.

The inventor has found it interesting to explore if it would be possible to modify the stretching technology in a way which would allow use of lower stretching temperatures and/or lower stretch ratios, and thereby create different and interesting properties for each end product. The example in the present description indicates what has been achieved. It is also likely, although not yet proven, that the present invention will permit stretching of film in higher gauges than those which have been achieved before.

In mechanical technology, it is well known that a spot-formed defect in a metal plate tends to develop linearly if the plate gets under a sufficient one-directional stress. This development takes place under an angle of 45 degrees to the direction of stress. Similarly, the inventor has found that a small defect in a practically unoriented plastic film, e.g. a small air bubble, tends to develop into a thin, short, angular line when the film comes under a sufficient tension.

In the present invention, this phenomenon is utilized for improved orientation of a polymer film, formed form molten, dispersed or dissolved state. As a start of this orientation process, the film becomes embossed in a pattern of closely spaced dots or thin short lines to become oriented within these embossments. Thereafter, the orientation process is continued in one or more steps by m.d. stretching, t.d. stretching or combined m.d. and t.d. stretching, such that the embossed and oriented dots or lines gradually grow. The orientation process is carried out to the extent that essentially the entire film becomes oriented.

For most applications, the high molecular weight polymer mainly consists of polyolefin, polyamide, polyester, polyvinylidene chloride, or a biodegradable polymer.

Depending on the application of the final product, the embossment may be carried out in one, two or more steps.

Further re the embossment, the distance between any adjacent dots or short lines is preferably shorter than 50 mm, more preferably shorter than 30 mm, and still more preferably shorter than 10 mm. This refers to a slack state immediately prior to the continued stretching.

When two or more steps of embossment are carried out, it may be advantageous to form a pattern, in which embossed lines cross each other or form zig-zag.

Two films may become embossed simultaneously, while one is arranged on top of the other.

The embossment and subsequent stretching may be carried out on a lay-flat tube. In this case, and when two films are embossed simultaneously, one on top of the other, the embossment is preferably carried out first from one outer surface, and then from the other outer surface.

The film to become embossed and stretched, may have started as a tubular film extruded from a circular die. Then the molten or semi-molten tubular film in the state of draw-down is preferably blown in a ratio no less than 1,1:1, preferably no less than 1,2:1, and more preferably no less than 1,3:1.

A particular interesting product is the so-called "cross-laminate", which is a film-analogy to plywood. It can be defined as a film laminate comprising at least two films which each either is uniaxially, or is unbalanced biaxially oriented, and are laminated in such manner, that the uniaxial or unbalanced biaxial directions in different films cross each other. Most practical, an m.d. oriented tubular film is cut on bias to form an obliquely oriented film, which thereafter is continuously laminated with a similarly made obliquely oriented film, turned such that the directions of orientation cross each other. The first disclosure of such cross-lamination is GB816607A (Ole-Bendt Rasmussen), which claims priority from 1954. A particularly practical way of carrying out such process and apparatus for this are known from US5,248,366 and US5,361,469 (both Ole-Bendt Rasmussen and priority from 1988). Another prior art technology is disclosed in FR1459458A (Smith & Nephew, 1966).

For some end-uses of the embossed and stretched film, a corrugated look of the film may be advantageous, but for some uses a plain look may be preferable. In such cases, the depth of the original embossment must be carefully adapted such that the embossments in the final product become practically invisible when the film is studied with the naked eye, at a distance of about 100 cm.

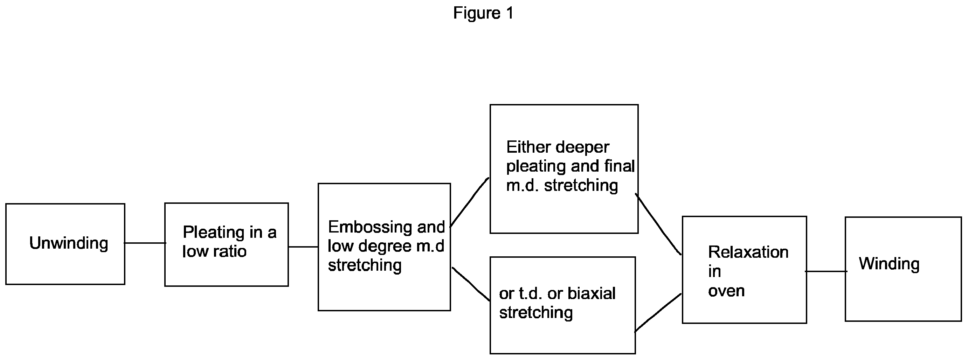

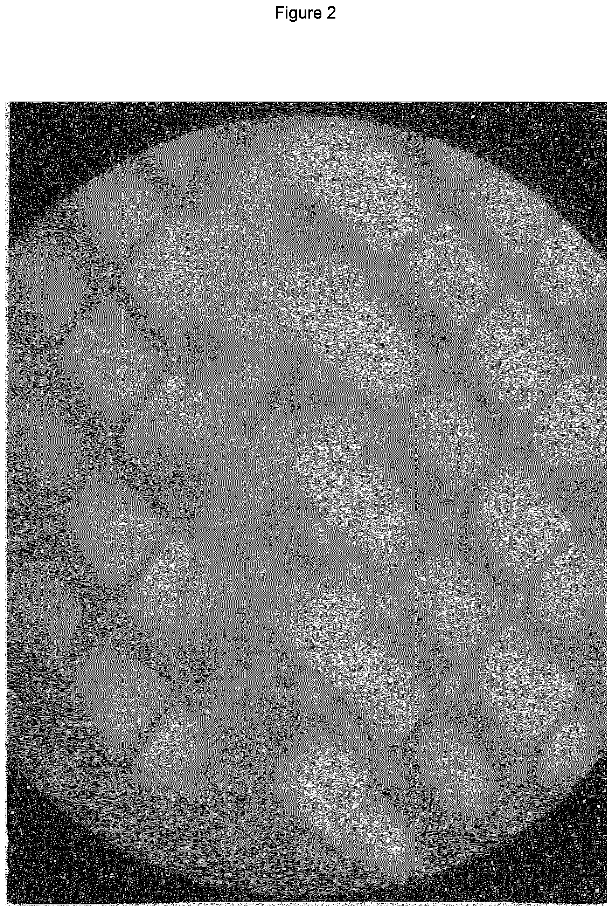

The process, apparatus (not claimed) and product (not claimed) shall now be described in further detail with references to the flow-sheet fig. 1 and the photo fig. 2, the latter showing a film in relaxed state immediately after the embossment and directly following m.d. stretching in ratio 1,5:1. The embossment was in the form of round dots. The distance between adjacent dots on the roller was 20 mm in both t.d. and m.d. When making the photo, the film was placed between crossing polarization filters, and light was sent through the assemblage.

In fig. 1, the basically unoriented film (or assemblage of two, non-bonded films) becomes pleated in a low ratio while kept under m.d. tension. This step is optional, but preferable. In the next step, the film becomes embossed between a he-shaped and a she-shaped embossment roller. While the film leaves these rollers it is m.d. stretched in a low ratio. This stretching is also optional, but preferable. After this follows a process of deeper pleating by conventional means (known from conventional m.d. stretching processes) and final m.d. stretching, or alternatively (without any pleating) either t.d. or biaxial stretching. A biaxial stretching can take place in three different ways, namely a) first m.d. stretching, then t.d. stretching in a tenter-frame; b) opposite of a); and c) combined m.d. and t.d. stretching in a special tenter-frame. Finally, the oriented film is brought to relax and to some extent contract in an oven heated to a temperature near the melting range of the polymer, otherwise it will gradually shrink during storage and use.

In fig. 2, the vertical direction represents the m.d. of the embossed and directly thereafter mildly stretched film. The dots have developed and formed lines, which in this experiment have become continuous. That is due to the short distance between the dots. Such fine and even pattern facilitates the final stretching, but makes the embossment rollers expensive, and as it appears from the main claim, the invention has a broader scope re the form and distribution of the embossments.

## Claims

1. A process to orient a high molecular weight polymer film, formed from molten, dispersed or dissolved state, wherein as a start of this orientation process the film becomes embossed in a pattern of closely spaced dots or thin short lines, thereby becoming oriented within these embossments, whereafter the orientation process is continued in one or more steps by m.d. stretching, t.d. stretching, or combined m.d. and t.d. stretching, whereby the embossed and oriented dots or lines gradually grow and develop until essentially the entire film has become oriented; **characterised in that**
two films become embossed simultaneously, while one is arranged on top of the other.

2. A process according to claim 1, **characterised in that** the high molecular weight polymer mainly consists of polyolefin, polyamide, polyester, polyvinylidene chloride, or a biodegradable polymer.

3. A process according to claim 1 or claim 2, **characterised by** at least two such steps of embossment.

4. A process according to claim 1, 2 or 3, **characterised in that** as measured in slack state immediately prior to the continued stretching, the distance between any adjacent dots or short lines, is shorter than 50 mm.

5. A process according to claim 4, **characterised in that** these distances are shorter than 30 mm, preferably shorter than 10 mm.

6. A process according to claim 3, **characterised in that** there is formed a pattern of embossed lines, which cross each other, or form a zig-zag pattern.

7. A process according to any of the claims 1-6, **characterised in that** the process is carried out on a lay-flat tubular film.

8. A process according to claim 6 or 7, **characterised in that** the embossment is carried out, first from one outer surface, and then from the other outer surface.

9. A process according to any of the preceding claims, **characterised in that** the film originally was a tubular film extruded from a circular die, and during draw-down the molten or semi-molten tubular film is blown in a ratio no less than 1,1:1, preferably no less than 1,2:1, and more preferably no less than 1,3:1.

## Patentansprüche

1. Verfahren zum Orientieren einer hochmolekularen Polymerfolie, ausgebildet aus geschmolzenem, dispergiertem oder gelöstem Zustand, wobei als ein Anfang dieses Orientierungsverfahrens die Folie in ein Muster aus eng beieinander liegenden Punkten oder dünnen kurzen Linien geprägt wird und dadurch innerhalb dieser Prägungen orientiert wird, wonach das Orientierungsverfahren in einem oder mehreren Schritten durch m.d.-Dehnung, t.d.-Dehnung oder kombinierte m.d.- und t.d.-Dehnung fortgesetzt wird, wodurch die geprägten und orientierten Punkte oder Linien allmählich wachsen und sich entwickeln, bis die gesamte Folie im Wesentlichen orientiert ist; **dadurch gekennzeichnet, dass**
zwei Folien gleichzeitig geprägt werden, wobei eine über der anderen angeordnet ist.

2. Verfahren nach Anspruch 1, **dadurch gekennzeichnet, dass** das hochmolekulare Polymer hauptsächlich aus Polyolefin, Polyamid, Polyester, Polyvinylidenchlorid oder einem biologisch abbaubaren Polymer besteht.

3. Verfahren nach Anspruch 1 oder 2, **gekennzeichnet durch** wenigstens zwei solcher Schritte der Prägung.

4. Verfahren nach Anspruch 1, 2 oder 3, **dadurch gekennzeichnet, dass** der Abstand zwischen beliebigen benachbarten Punkten oder kurzen Linien, gemessen im schlaffen Zustand unmittelbar vor dem weiteren Dehnen, kürzer als 50 mm ist.

5. Verfahren nach Anspruch 4, **dadurch gekennzeichnet, dass** diese Abstände kürzer als 30 mm sind, vorzugsweise kürzer als 10 mm.

6. Verfahren nach Anspruch 3, **dadurch gekennzeichnet, dass** ein Muster aus geprägten Linien ausgebildet wird, die sich kreuzen oder ein Zick-Zack-Muster ausbilden.

7. Verfahren nach einem der Ansprüche 1-6, **dadurch gekennzeichnet, dass** das Verfahren auf einer flachgelegten Schlauchfolie ausgeführt wird.

8. Verfahren nach Anspruch 6 oder 7, **dadurch gekennzeichnet, dass** die Prägung zunächst von einer Außenoberfläche und dann von der anderen Außenoberfläche ausgeführt wird.

9. Verfahren nach einem der vorhergehenden Ansprüche, **dadurch gekennzeichnet, dass** die Folie ursprünglich eine Schlauchfolie gewesen ist, die aus einem kreisförmigen Stempel extrudiert wurde, und die halbgeschmolzene Schlauchfolie während des Streckens in einem Verhältnis von nicht weniger als 1,1 : 1, vorzugsweise von nicht weniger als 1,2 : 1 und stärker bevorzugt von nicht weniger als 1,3 : 1 geblasen wird.

## Revendications

1. Procédé d'orientation d'un film polymère de haut poids moléculaire formé à partir d'un état fondu, dispersé ou dissous, où le début de ce procédé d'orientation fait intervenir un gaufrage du film produisant un motif de points ou de lignes courtes et fines étroitement espacés, le film devenant ainsi orienté au niveau de ces gaufrages, le procédé d'orientation comportant ensuite une ou plusieurs étapes d'étirement dans la direction machine (MD), d'étirement dans la direction transversale à la MD (TD) ou d'étirements MD et TD combinés, où les points ou lignes gaufrés et orientés font graduellement l'objet d'une croissance et d'un développement essentiellement jusqu'à ce que le film entier soit orienté ; **caractérisé en ce que**
deux films sont gaufrés simultanément alors qu'un est disposé au-dessus de l'autre.

2. Procédé selon la revendication 1, **caractérisé en ce que** le polymère de haut poids moléculaire consiste principalement en une polyoléfine, un polyamide, un polyester, un poly(chlorure de vinylidène) ou un polymère biodégradable.

3. Procédé selon la revendication 1 ou la revendication 2, **caractérisé par** au moins deux telles étapes de gaufrage.

4. Procédé selon la revendication 1, 2 ou 3, **caractérisé en ce que** la distance entre deux points ou courtes lignes adjacents, telle que mesurée dans un état lâche immédiatement avant l'étirement continu, est inférieure à 50 mm.

5. Procédé selon la revendication 4, **caractérisé en ce que** ces distances sont inférieures à 30 mm, préférablement inférieures à 10 mm.

6. Procédé selon la revendication 3, **caractérisé en ce qu'**est formé un motif de lignes gaufrées qui s'entrecroisent ou forment un motif en zig-zag.

7. Procédé selon l'une quelconque des revendications 1 à 6, **caractérisé en ce que** le procédé est effectué sur un film tubulaire extrudé à plat.

8. Procédé selon la revendication 6 ou 7, **caractérisé en ce que** le gaufrage est tout d'abord effectué depuis une surface extérieure et ensuite depuis l'autre surface extérieure.

9. Procédé selon l'une quelconque des revendications précédentes, **caractérisé en ce que** le film était initialement un film tubulaire extrudé au moyen d'une filière circulaire, et **en ce que** lors de l'étirage, le film tubulaire à l'état fondu ou semi-fondu est soufflé à un taux qui n'est pas inférieur à 1,1:1, préférablement qui n'est pas inférieur à 1,2:1 et plus préférablement qui n'est pas inférieur à 1,3:1.
